# FASCICULE DE BREVET EUROPEEN

(11) **EP 1 665 485 B1**
(45) Date de publication et mention de la délivrance du brevet: **20.04.2011**
(21) Numéro de dépôt: 04787332.8
(22) Date de dépôt: 08.09.2004
(51) Int. Cl.: H02G 13/00

(54) **PARATONNERRE A DISPOSITIF D' AMORCAGES PAR IMPULSION ET PROPAGATION ENTRETENUE**
BLITZABLEITER MIT PULSIERENDER ENTZÜNDUNGSVORRICHTUNG MIT GEHALTENEM LAUFZEIT
LIGHTING ROD PROVIDED WITH A PULSE DISCHARGE DEVICE AND CONTINUOUS PROPAGATION

(30) Priorité: 09.09.2003 FR 0310591
(43) Date de publication de la demande: 07.06.2006
(73) Titulaire: Franklin France 2F, 75013 Paris (FR)
(72) Inventeur: DJERMOUNE, Djamal, F-7785 Lognes (FR)
(74) Mandataire: Sauvage, Renée
(86) Numéro de dépôt international: PCT/FR2004/002280
(87) Numéro de publication internationale: WO 2005/027289

(56) Documents cités:
- EP-A- 0 402 552
- FR-A- 2 799 585
- US-A- 4 652 694

## Description

L'invention concerne un paratonnerre du type à dispositif d'amorçage.

La présente invention trouve son application dans la protection contre l'impact direct de la foudre de toute structure, immeuble, maison, usine, monument, centre de loisir, pylône de télécommunication, lignes de transport d'énergie, etc.

Comme chacun le sait, le premier dispositif de protection contre la foudre est dû à Benjamin Franklin qui a proposé le paratonnerre dit "paratonnerre de Franklin", également appelé "tige de Franklin", "pointe inerte" ou "pointe sèche". Ce dispositif est composé d'une tige métallique reliée à la terre et pointue dans sa partie supérieure. Son principe de fonctionnement est qu'à l'approche d'un nuage orageux, le champ local dans la région voisine de la pointe de la tige peut, à cause de l'amplification due à l'effet de pointe, atteindre des valeurs suffisamment grandes pour provoquer un effet couronne. Ce dernier correspond à la formation d'un milieu ionisé (plasma) très localisé autour de la pointe. Il est engendré par une multitude d'avalanches électroniques qui se succèdent de façon quasi-autonome. Les électrons germes qui sont à l'origine de ces avalanches peuvent être créés par divers mécanismes : ionisation naturelle due à la radioactivité et aux rayons cosmiques, détachement des électrons des ions négatifs, photo-ionisation du gaz, etc.

Durant la phase de maturité du nuage orageux, le processus d'électrisation s'amplifie et, quand il est suffisamment grand, il génère un coup de foudre qui commence par la formation, au sein du nuage, d'un traceur descendant, qui se propage par bonds de quelques dizaines de mètres en direction du sol. Pendant cette phase, l'effet couronne sur la pointe de la tige Franklin s'amplifie et le volume d'expansion du plasma autour de la pointe augmente.

Lorsque le traceur descendant atteint des altitudes assez basses (inférieures à 100 mètres), il développe au voisinage de la pointe un champ électrique pouvant dépasser quelques centaines de kV/cm. En présence d'un tel champ, des décharges électriques filamentaires, appelées "dard" ou "streamers", prennent naissance dans le volume ionisé créé par l'effet couronne et se propagent en direction du traceur descendant en laissant derrière elles un canal d'air partiellement ionisé. En fonction de l'énergie dont elles disposent au moment de leur amorçage, énergie électrostatique emmagasinée dans la capacité (pointe Franklin/traceur descendant), ces décharges peuvent parcourir des distances plus ou moins grandes avant de s'éteindre et de disparaître. Chacune de ces décharges est suivie d'une période sombre qui correspond à la durée nécessaire au rétablissement de la distribution du champ électrique sur la pointe, durée à laquelle s'ajoute le temps aléatoire de formation d'un nouvel électron germe. La décharge qui démarre le plus tôt en disposant d'une énergie optimale, peut se transformer en traceur ascendant et aller jusqu'à la jonction avec le traceur descendant : c'est la capture du coup de foudre.

Le paratonnerre de Franklin tire son efficacité de l'effet de pointe qui permet d'amplifier suffisamment le champ électrique local pour amorcer le traceur ascendant.

On a cherché depuis longtemps à augmenter le rayon de protection des paratonnerres en combinant divers moyens à l'effet de pointe de la tige de Franklin. EP 402 552 décrit un tel paratonnerre

Parmi ces moyens, certains agissent sur le milieu environnant le paratonnerre et le préparent à un éventuel coup de foudre en y augmentant la densité des charges libres, et donc sa conductivité. Le milieu devient alors un chemin préférentiel pour le traceur descendant. Pour créer de telles charges libres dans l'air, plusieurs solutions ont été proposées parmi lesquelles on peut citer :
- l'utilisation d'une source radioactive qui consiste à installer directement sur le paratonnerre des pastilles d'éléments radioactifs qui émettent des rayons énergétiques α. Par ionisation, ce rayonnement permet d'augmenter la fréquence de production des paires électrons/ions positifs dans l'air : cependant cette solution ne peut plus être envisagée compte tenu des restrictions réglementaires de l'utilisation des radio-éléments dans la plupart des pays, et notamment en France, où ils ont fait l'objet d'une interdiction définitive dans la fabrication des paratonnerres ;
- le recours à une source électrique extérieure, telle qu'une batterie ou un générateur haute tension, connectée entre la pointe du paratonnerre et la terre, mais cette solution implique des opérations de maintenance qui la rendent onéreuse et peu pratique ;
- l'utilisation d'une source piézo-électrique qui consiste à équiper le paratonnerre d'un dispositif mécanique qui, sous l'action du vent, exerce une pression sur des éléments en céramique piézo-électrique, lesquels délivrent une tension qui est appliquée sur la pointe du paratonnerre, la pointe du paratonnerre étant placée dans une coque (tête) conductrice pour protéger les éléments piézo-électriques de l'impact direct de la foudre et un système d'orifices étant réalisé dans les parties supérieure et inférieure de la coque de telle sorte que les charges qui y sont créées soient expulsées par effet Venturi : bien que tout nuage orageux soit accompagné d'un vent plus ou moins intense, ce système, qui n'est pas équipé d'un dispositif de stockage et de contrôle de l'énergie, est tributaire de la présence de vent dans les quelques instants qui précèdent le coup de foudre.

D'autres moyens tendant à augmenter le rayon de protection des paratonnerres ont eu pour objectif que les traceurs ou précurseurs ascendants s'amorcent plus tôt sur la pointe du paratonnerre que sur les autres aspérités inertes avoisinantes. En général, pour ce faire, les paratonnerres ont été équipés d'une électrode pour capter le champ électrique ambiant et/ou sa variation temporelle. Le système formé par cette électrode et la partie du paratonnerre connectée à la terre se comporte comme un condensateur dont la capacité est très faible (quelques dizaines de pF). Dans certains de ces paratonnerres, ce condensateur permet de charger un autre condensateur dont la capacité est plus grande (quelques µF). Lorsque la valeur du champ électrique et/ou sa variation temporelle dépasse un seuil donné, caractéristique de l'approche d'un traceur descendant, le condensateur est déchargé sur la pointe du paratonnerre, provoquant une étincelle qui initie l'amorçage du traceur ascendant. La majorité de ces systèmes utilisent l'énergie du champ électrique ambiant uniquement pour cet amorçage. Cependant, les paratonnerres équipés de tels systèmes ne peuvent concilier l'avance à l'amorçage et le besoin énergétique nécessaire à la propagation du traceur ascendant car la capacité du condensateur entre la pointe du paratonnerre et la terre doit être à la fois suffisamment petite pour permettre une avance à l'amorçage, mais suffisamment grande pour entretenir la propagation du traceur. D'autres systèmes, en revanche, préconisent l'utilisation de l'énergie du champ électrique ambiant pour charger des condensateurs de forte capacité afin d'apporter une énergie supplémentaire à la décharge ascendante et entretenir sa propagation. Ces systèmes comportent néanmoins un inconvénient majeur : pour un même coup de foudre, la charge du condensateur nécessite un champ électrique plus intense, ce qui n'est possible que si le coup de foudre est plus proche du paratonnerre. Or, l'objectif poursuivi est, au contraire, d'augmenter le rayon d'action du paratonnerre.

Comme il ressort de ce qui précède, les efforts qui ont été faits à ce jour pour augmenter le rayon d'action des paratonnerres ont porté, principalement, sur l'amélioration du temps d'amorçage du traceur ascendant. Cependant, l'efficacité d'un paratonnerre ne dépend pas uniquement de l'instant d'amorçage d'une étincelle sur sa pointe. Encore faut-il s'assurer que cette étincelle puisse se transformer en traceur ascendant ("leader") capable de se propager sur une grande distance pour accrocher éventuellement le traceur descendant. Lors de sa propagation, le traceur ascendant tire l'essentiel de son énergie du champ électrique rayonné par le traceur descendant. Toutefois, la valeur de celui-ci peut être insuffisante lorsque l'amorçage du traceur ascendant se produit très tôt, le traceur descendant étant alors trop loin. Dans ces conditions, la propagation du traceur ascendant nécessite un apport minimal d'énergie extérieure pendant sa phase de démarrage. Ce besoin en énergie est d'autant plus grand que l'amorçage se produit plus tôt. Dans la littérature, cette énergie est exprimée par la notion du champ électrique de stabilisation, qui est la valeur minimale du champ électrique moyen au-dessus de laquelle toute décharge électrique qui s'amorce sur la pointe du paratonnerre est une décharge stable, c'est-à-dire capable de se transformer en traceur et de se propager sur de grandes distances. Le critère énergétique apparaît donc comme une condition nécessaire à toute amélioration (augmentation) du rayon d'action (distance de protection) d'un paratonnerre.

La présente invention a donc pour objectif d'apporter un nouveau paratonnerre, à dispositif d'amorçage autonome, prenant en compte le besoin énergétique du traceur ascendant pour sa propagation, objectif qui est atteint en ce sens qu'elle propose un paratonnerre du type à dispositif d'amorçage qui est caractérisé en ce qu'il comporte :
- une première unité, dite "unité de puissance", assurant la collecte de l'énergie éolienne et/ou solaire, sa transformation en énergie électrique et son stockage ;
- une seconde unité, dite "unité d'impulsion", assurant la capture et le stockage de l'énergie électrostatique ambiante à l'approche d'un nuage orageux, et
- des moyens adaptés, en fonction de valeurs de consigne, à déclencher, d'une part, ladite unité d'impulsion pour l'amorçage d'un traceur ascendant et, d'autre part, ladite unité de puissance pour l'entretien de la propagation dudit traceur.

L'unité de puissance comprend, pour la collecte de l'énergie éolienne et/ou solaire, par exemple, un dispositif à cellules photovoltaïques et/ou un dispositif éolien à cellules piézo-électriques et/ou un dispositif éolien couplé à un alternateur à aimants permanents et, pour le stockage de l'énergie électrique, au moins un condensateur de forte capacité, c'est-à-dire supérieure à 10 µF.

De son côté, l'unité d'impulsion comprend, comme moyen de capture de l'énergie électrostatique ambiante, un organe de prise de potentiel, qui peut être la pointe du paratonnerre elle-même, et comme moyen de stockage de cette énergie, au moins un condensateur de faible capacité, c'est-à-dire largement inférieure à 1 nF. Plus précisément, la capacité du condensateur d'impulsion est optimisée afin de capter le maximum d'énergie électrostatique atmosphérique tout en permettant à la tension à ses bornes d'atteindre le seuil d'amorçage d'une décharge "dard" sur l'organe de prise de potentiel.

Le paratonnerre comprend en outre, d'une part, un premier capteur intégré qui mesure le champ électrique ambiant capté par ledit organe de prise de potentiel pour le comparer à une valeur légèrement inférieure au seuil d'amorçage caractéristique d'une décharge "dard" et qui, si le champ électrique ambiant mesuré dépasse cette valeur, commande l'inversion de la tension aux bornes dudit condensateur de l'unité d'impulsion et la décharge dudit condensateur sur l'organe de prise de potentiel et, d'autre part, un second capteur intégré qui mesure l'intensité de la décharge électrique qui se forme sur l'organe de prise de potentiel, pour la comparer à une valeur d'intensité caractéristique d'une décharge de type traceur et qui, si l'intensité mesurée est supérieure ou égale à ce seuil, commande la décharge du condensateur de l'unité de puissance.

L'association de l'unité de puissance et de l'unité d'impulsion met en oeuvre une nouvelle technique qui permet de concilier l'avance à l'amorçage et le besoin énergétique de la décharge ascendante. Ces deux unités sont fortement couplées, d'où l'importance de chacun des deux capteurs intégrés.

On comprend que le paratonnerre selon l'invention utilise l'énergie stockée dans les condensateurs de l'unité de puissance de façon couplée et synchrone avec l'énergie électrostatique présente dans l'atmosphère à l'approche d'un coup de foudre.

Dans un mode de réalisation de l'invention, ledit premier capteur intégré déclenche l'inversion de la tension aux bornes du condensateur d'impulsion quand la tension aux bornes dudit condensateur est au moins égale à 90% du seuil d'amorçage d'une décharge "dard".

La décharge du condensateur d'impulsion provoque l'inversion de la polarité de l'organe de prise de potentiel.

Dans un mode de réalisation particulier, le temps nécessaire à l'inversion de la tension aux bornes du condensateur d'impulsion est au plus égal à 10 µs.

Le paratonnerre comprend, en outre, des moyens permettant de détecter la polarité d'un nuage orageux, et l'unité de puissance comporte un transformateur d'impulsion haute tension à double enroulements primaires connectés chacun , via l'un de deux thyristors de puissance, audit condensateur de forte capacité, formant condensateur de stockage, ledit condensateur se déchargeant via celui des enroulements primaires qui est sélectionné en fonction de la polarité du nuage orageux, de sorte que l'impulsion haute tension délivrée par le secondaire est de signe contraire à celui dudit nuage orageux.

Dans un mode de réalisation particulier, le paratonnerre de l'invention comporte un éclateur surmonté par la base évasée en parapluie de la pointe du paratonnerre, de sorte que l'éclateur est protégé contre la pluie.

L'invention sera mieux comprise à la lecture de la description suivante faite en relation avec les dessins annexés dans lesquels :
- la figure 1a est une coupe longitudinale schématique d'une forme d'exécution du paratonnerre selon l'invention, comportant, comme source d'énergie, un dispositif éolien à cellules piézo-électriques ;
- la figure 1b représente un détail à plus grande échelle de la figure 1a ;
- les figures 1c et 1d sont des vues en perspective de deux dispositifs susceptibles d'être substitués au dispositif éolien à cellules piézo-électriques de la figure 1a ;
- la figure 2 est un schéma synoptique du paratonnerre selon l'invention, et
- la figure 3 est un schéma bloc du circuit électronique général mis en oeuvre selon l'invention.

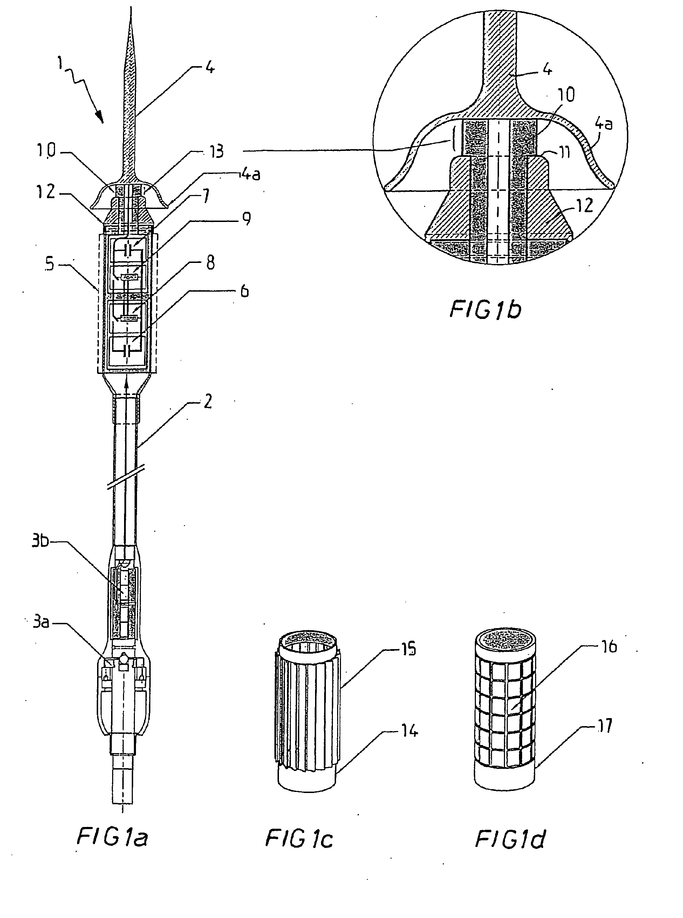

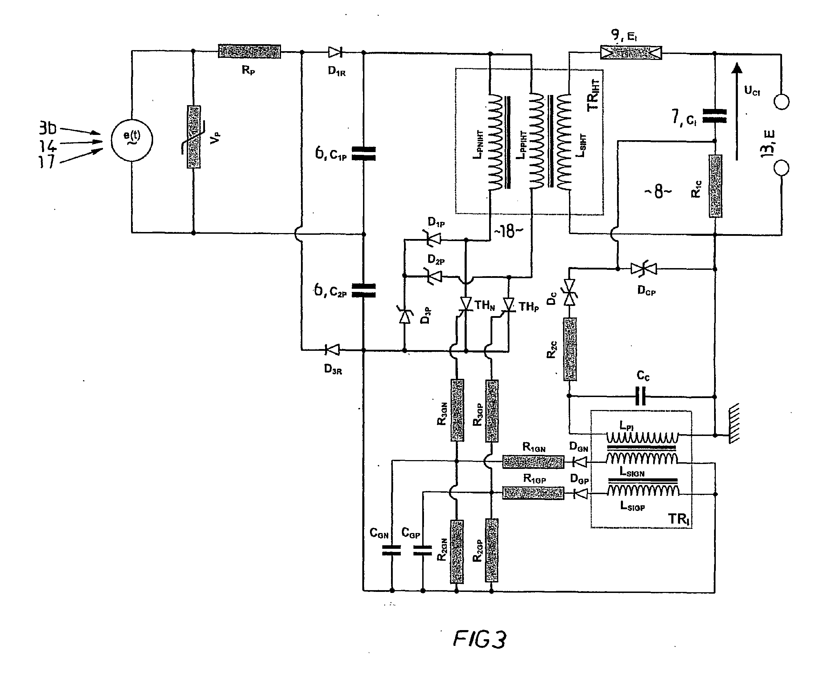

La figure 1a représente une forme d'exécution possible d'un paratonnerre 1, selon l'invention. Le paratonnerre 1 comprend, de manière classique, une tige métallique 2, reliée à la terre, et montée entre une source d'énergie 3a et 3b et une pointe ou électrode ou organe de prise de potentiel 4, faisant office de capteur du champ électrique et de point d'impact du coup de foudre, pointe 4 qui est isolée par rapport à la terre. Le paratonnerre comporte, en outre, dans un carter 5, un circuit électronique dont les composants principaux sont illustrés ici, mais qui sera décrit en détail en relation avec la figure 3. Ce circuit comprend deux condensateurs, à savoir un condensateur de forte capacité 6 et un condensateur de faible capacité 7, étant entendu que le singulier "un condensateur" peut tout aussi bien avoir le sens de "plusieurs condensateurs". Aux condensateurs 6 et 7 sont associés, respectivement, des systèmes électroniques de commande et de contrôle comprenant des capteurs intégrés 8 et 9. L'organe de capture 4 et le condensateur 7 font partie d'un circuit dit "d'impulsion", tandis que la source d'énergie 3a et 3b et le condensateur 6 font partie d'un dispositif dit "de puissance".

Comme il ressort de la figure 1b, la pointe 4 du paratonnerre s'évase, à sa base, en un parapluie 4a. Le fond concave du parapluie 4a repose sur une pièce isolante 10 présentant un épaulement 11 au moyen duquel elle siège sur la partie supérieure d'une électrode de masse 12 qui coiffe le carter 5 et qui est reliée à la terre. La partie de la pièce 10 en deçà de l'épaulement 11 écarte le fond concave du parapluie 4a de la pièce 12 sur une distance donnée, formant pont éclateur 13 dans l'air. Le parapluie 4a garantit le fonctionnement de l'éclateur 13 sous la pluie.

La source d'énergie du paratonnerre représentée à la figure 1a est constituée d'un dispositif mécanique éolien 3a qui, sous l'effet du vent, exerce une pression sur des éléments en céramique piézo-électrique 3b. Le rapport de transmission mécanique est suffisamment grand pour que, même en présence d'un vent de très faible vitesse, la tension délivrée par les éléments en céramique piézo-électrique 3b soit élevée.

Au lieu d'utiliser des éléments en céramique piézo-électrique 3b, la source d'énergie éolienne peut employer un alternateur à aimants permanents 14 auquel est couplé mécaniquement un ventilateur tangentiel 15 (figure 1c). La pression exercée par le vent sur les ailettes du ventilateur 15 permet d'entraîner l'alternateur 14. Celui-ci produit une tension sinusoïdale dont l'amplitude et la fréquence dépendent de la vitesse du vent. Pour une vitesse de vent minimale donnée, on peut utiliser un transformateur élévateur afin d'assurer une amplitude suffisante de la tension de charge des condensateurs de puissance.

Que l'on utilise le dispositif à éléments en céramique piézo-électrique de la figure 1a ou l'alternateur à aimants permanents de la figure 1c, le vent constitue une source d'énergie sûre puisque le vent est un élément fondamental dans la formation d'un nuage orageux.

En variante, le paratonnerre peut utiliser l'énergie solaire comme source d'énergie. Dans ce cas, la surface extérieure du carter 5 peut être recouverte de cellules photovoltaïques 16, et d'un dispositif élévateur de tension 17 (figure 1d), alimentant le dispositif de puissance en transformant, par effet photoélectrique, l'énergie solaire en énergie électrique. Dans ce cas, le stockage de l'énergie doit se faire en période de beau temps lorsque l'intensité du rayonnement solaire est la plus grande. Le choix des accumulateurs (condensateurs) de stockage d'énergie est donc très important. Leur durée caractéristique de décharge (courant de fuite) doit être la plus longue possible si l'on veut conserver la charge stocké jusqu'à un éventuel coup de foudre puisque, en période orageuse, l'intensité du rayonnement solaire peut ne pas être suffisante pour les recharger.

Il est bien entendu que les sources d'énergie éolienne et solaire ne s'excluent pas l'une l'autre et que le paratonnerre selon l'invention peut avoir recours à une combinaison des deux.

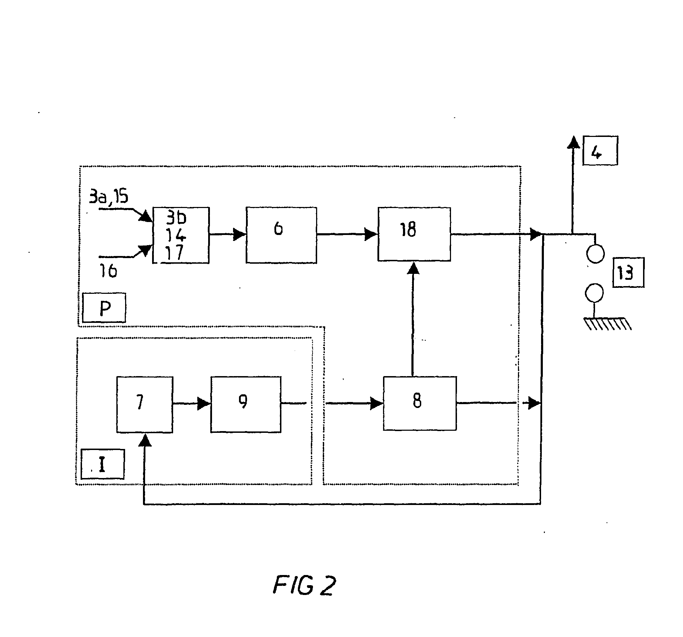

Le principe du fonctionnement du paratonnerre représenté à la figure 1, et de ses variantes des figures 1c et 1d, est schématisé à la figure 2.

Le paratonnerre selon l'invention comporte fondamentalement une unité de puissance (bloc P) et une unité d'impulsion (bloc I).

En période hors orage, l'unité de puissance P collecte l'énergie, qui est soit de l'énergie éolienne selon 3a ou 15, soit de l'énergie solaire selon 16, soit les deux, la transforme en énergie électrique au moyen du dispositif approprié 3b, 14 et/ou 17, et la stocke dans le condensateur de puissance 6 de forte capacité.

A l'approche d'un nuage orageux, l'unité d'impulsions I emmagasine dans le condensateur de faible capacité 7 l'énergie électrostatique présente. Le capteur intégré 9 mesure la valeur du champ électrique ambiant et, à l'approche d'un coup de foudre, provoque l'inversion de la tension aux bornes du condensateur 7, ce qui provoque une inversion quasi instantanée de la polarité de la pointe 4 du paratonnerre, entraînant une amplification brusque du champ électrique sur sa pointe 4 et engendrant l'amorçage d'une décharge électrique ascendante.

Pour provoquer l'amorçage de la décharge ascendante, le déclenchement de l'unité d'impulsion I doit se faire lorsque la valeur du champ électrique ambiant est comprise entre le seuil d'apparition de "l'effet couronne" et le seuil de formation d'une décharge "dard" sur la pointe 4 du paratonnerre.

Aussitôt la décharge ascendante formée sur la pointe 4 du paratonnerre, le deuxième capteur intégré 8 mesure l'intensité du courant de cette décharge et détermine si le dispositif de puissance P doit, ou non, décharger le condensateur 6. En effet, l'évolution de la décharge initiale "dard" vers un traceur ascendant est accompagnée d'une très forte augmentation de la valeur du courant. Celui-ci croit d'une valeur de quelques centaines de milliampères, caractéristique d'une décharge "dard" à une valeur de quelques dizaines d'ampères, caractéristique de la décharge traceur. Lorsque la valeur de cette intensité atteint ou est sur le point d'atteindre le seuil caractéristique d'une décharge de type traceur, le deuxième capteur 8 donne l'ordre à l'ensemble 18, formé par le circuit permettant le choix de la polarité, le transformateur d'impulsion haute tension et les thyristors de puissance avec leurs diodes de protection, , de décharger le condensateur6.

Toute l'énergie stockée dans ce condensateur 6 est mise à la disposition du traceur ascendant pour entretenir sa propagation jusqu'à la capture du traceur descendant ou coup de foudre par la pointe 4. Après la capture du coup de foudre, le courant véhiculé est canalisé vers la terre par l'éclateur 13. L'ensemble est ainsi protégé contre toute surtension ou surintensité.

Si l'on en vient maintenant au détail du circuit (Figure 3), la tension e(t), fournie par la source d'énergie 3b et/ou 14 et/ou 17, est redressée par un pont redresseur double alternance (D_{1R} et D_{3R}) dont le point milieu est mis à la terre. La tension ainsi redressée permet de charger le condensateur de puissance formé par la mise en série des condensateurs 6, C_{1P} et 6, C_{2P}. L'association de la résistance R_{P} et de la varistance V_{P}, placée en amont du pont redresseur, lui assure, respectivement, une protection contre les surintensités et les surtensions. Bien que les condensateurs 6,C_{1P} et 6,C_{2P} soient de forte capacité, supérieure à 10 µF, leur charge ne nécessite pas pour autant un fort courant. Compte tenu de l'intervalle de temps relativement élevé entre deux orages successifs, en moyenne supérieur à 20 minutes, un courant de quelques milliampères suffit à charger ces condensateurs à une tension d'environ 1 kV.

La pointe 4 du paratonnerre capte une tension U_{cr} correspondant à la moyenne des surfaces équipotentielles qu'elle traverse. Cette tension est utilisée pour charger un condensateur d'impulsion 7,Cᵣ de faible capacité. Lorsque la tension aux bornes de ce dernier atteint la tension de claquage de l'éclateur 9, E_{I} (qui constitue le premier capteur intégré), celui-ci se ferme et le condensateur 7,C_{I} se décharge à travers l'inductance secondaire L_{SIHT} d'un transformateur d'impulsion haute tension (bloc TR_{IHT}). L'éclateur 9, E_{I} est dimensionné de sorte que sa tension de claquage U_{STR} soit légèrement inférieure au seuil de tension d'apparition des décharges "dard" sur la pointe 4. Pour emmagasiner un maximum d'énergie, la valeur de la capacité 7, C_{I} est la plus grande possible qui permette, à la tension à ses bornes, d'atteindre le seuil de tension U_{STR}. En effet, le système "traceur descendant" - "organe de capture du potentiel" (pointe 4) - "terre" se comporte comme un diviseur capacitif. Plus la valeur de la capacité 7, C_{I}, connectée entre la pointe 4 et la terre, est grande, plus faible est la tension à ses bornes. Lorsque l'éclateur 9,E_{I} se ferme, la tension aux bornes du condensateur 7, C_{I} s'inverse très rapidement, passant de la valeur U_{STR} à la valeur -U_{STR} au bout d'une dizaine de microsecondes, correspondant à une demi-période du circuit oscillant L_{SIHT}-C_{I}. Cette inversion de polarité engendre une brusque élévation de la tension entre le traceur descendant et la pointe 4 puisque celle-ci est directement connectée au condensateur 7,C_{I}. Comme la tension U_{STR} est très voisine de la tension seuil d'apparition d'une décharge "dard", l'augmentation de la tension entre le traceur ascendant et la tête du paratonnerre provoque l'amorçage d'une décharge "dard" sur sa pointe 4. Le courant caractéristique véhiculé par ce type de décharge est en général largement inférieur à 1 ampère. Si la distribution du champ électrique autour de la pointe 4 est suffisante, la décharge "dard" se transforme, au bout de quelques dizaines de centimètres de propagation, en une décharge électrique plus intense, dite "traceur", mettant en jeu des courants largement supérieurs à 1 ampère. A l'inverse, si le traceur descendant est trop éloigné, en dehors de la zone protégée par le paratonnerre, la valeur du champ électrique rayonné par celui-ci peut ne pas être suffisante pour transformer la décharge "dard" en décharge "traceur". Dans ces conditions, la décharge "dard" disparaît au bout de quelques centimètres de propagation en produisant une impulsion de courant. Elle est suivie d'une période sombre de quelques dizaines de microsecondes pendant laquelle aucune nouvelle décharge, ne peut avoir lieu à la pointe 4 du paratonnerre. Cette période sombre correspond à la phase de dispersion des charges électriques engendrées par la décharge et le rétablissement du champ électrique.

Les condensateurs de puissance 6, C_{1P} et 6, C_{2P} ne doivent se décharger que si la décharge électrique qui se forme sur la pointe 4 du paratonnerre est une décharge du type "traceur".

A cet effet, le paratonnerre est équipé d'un deuxième capteur intégré 8 qui mesure la valeur du courant de la décharge. Ce capteur 8 est réalisé sous la forme d'un circuit composé d'une résistance R_{1C}, montée en série avec le secondaire L_{SIHT} du transformateur TR_{IHT}, et d'une diode D_{c} qui devient passante lorsque la tension aux bornes de la résistance R_{1C} est supérieure à un certain seuil V_{Cseuil}. Ce circuit alimente, au travers d'un circuit filtrant (R_{2C}, C_{C}), le primaire L_{PI} d'un transformateur d'impulsion (bloc TR_{I}) dont le secondaire est composé de deux enroulements L_{SIGN} et L_{SIGP}. Selon la polarité de la tension primaire, des diodes D_{GN} et D_{GP} permettent de sélectionner lequel de deux thyristors de puissance TH_{P} et TH_{N}, doit être fermé en appliquant sur sa gâchette l'impulsion de tension fournie par le secondaire et filtrée par les circuits filtrants (R_{1GN}, C_{GN}, R_{2GN} et R_{3GN}) et (R_{1GP}, C_{GP} R_{2GP} et R_{3GP}) respectivement. Une diode D_{CP}, placée en parallèle avec la résistance R_{1C}, assure la protection du circuit capteur contre les surtensions en limitant la tension à un niveau légèrement supérieur à V_{Cseuil}. Le passage d'un courant au travers de la résistance R_{1C} engendre une chute de tension dont la valeur est proportionnelle à son amplitude. Il suffit donc de fixer la valeur de la résistance R_{1C} de sorte que la chute de tension engendrée soit supérieure à la tension V_{Cseuil} lorsque l'amplitude d'un courant de la décharge dépasse le seuil caractéristique d'une décharge "traceur".

Lors de la décharge des condensateurs de puissance 6, C_{1P} et 6, C_{2P}, l'impulsion haute tension générée aux bornes du secondaire L_{SIHT} du transformateur TR_{IHT} doit toujours être de signe opposé à la polarité du nuage orageux. Le primaire du transformateur TR_{IHT} est constitué, à cet effet, de deux enroulements (pôles opposés) L_{PNIHT} et L_{PPIHT} qui sont connectés au condensateur de stockage, formé par la mise en série des condensateurs 6, C_{1P} et 6, C_{2P}, respectivement via les thyristors de puissance TH_{N} et TH_{P} selon que ces condensateurs 6, C_{1P} et 6, C_{2P} sont déchargés via le premier ou le deuxième enroulement, la tension secondaire est ou bien positive ou bien négative. Comme décrit plus haut, le choix de la polarité est réalisé par le circuit comportant le capteur de courant 8, le transformateur d'impulsion TR_{I} et les diodes D_{GN} et D_{GP}. Il délivre alors une impulsion de tension qui, selon la polarité du nuage, va être appliquée sur la gâchette du thyristor approprié. Les diodes D_{1P}, D_{2P} et D_{3P} limitent la tension aux bornes des thyristors TH_{P} et TH_{N}. Elles assurent leur protection contre les surtensions.

Après la capture du coup de foudre, le courant est canalisé vers la terre par l'éclateur 13,E.

## Revendications

1. Paratonnerre du type à dispositif d'amorçage **caractérisé en ce qu'**il comporte :
- une première unité, dite "unité de puissance" (P), assurant la collecte de l'énergie éolienne et/ou solaire, sa transformation en énergie électrique et son stockage ;
- une seconde unité, dite "unité d'impulsion" (I), assurant la capture et le stockage de l'énergie électrostatique ambiante à l'approche d'un nuage orageux, et
- des moyens adaptés, en fonction de valeurs de consigne, à déclencher, d'une part, ladite unité d'impulsion (I) pour l'amorçage d'un traceur ascendant et, d'autre part, ladite unité de puissance (P) pour l'entretien de la propagation dudit traceur.

2. Paratonnerre selon la revendication 1, **caractérisé en ce que** l'unité de puissance comprend, pour la collecte de l'énergie éolienne et/ou solaire, un dispositif à cellules photovoltaïques (16) et (17) et/ou un dispositif éolien à cellules piézo-électriques (3a) et (3b) et/ou un dispositif éolien couplé à un alternateur à aimants permanents (14) et (15) et, pour le stockage de l'énergie électrique, au moins un condensateur de forte capacité (6).

3. Paratonnerre selon la revendication 1 ou 2, **caractérisé en ce que** ladite unité d'impulsion comprend, comme moyen de capture de l'énergie électrostatique ambiante, un organe de prise de potentiel (4), et comme moyen de stockage de cette énergie, au moins un condensateur de faible capacité (7).

4. Paratonnerre selon la revendication 3, **caractérisé en ce que** la capacité du condensateur d'impulsion (7) est optimisée afin de capter le maximum d'énergie électrostatique atmosphérique tout en permettant à la tension à ses bornes d'atteindre le seuil d'amorçage d'une décharge "dard" sur l'organe de prise de potentiel (4).

5. Paratonnerre selon la revendication 3 ou 4, **caractérisé en ce qu'**il comprend en outre un premier capteur intégré (9) qui mesure le champ électrique ambiant capté par ledit organe de prise de potentiel (4) pour le comparer à une valeur légèrement inférieure au seuil d'amorçage caractéristique d'une décharge "dard" et qui, si le champ électrique ambiant mesuré dépasse cette valeur, commande l'inversion de la tension aux bornes dudit condensateur (7) de l'unité d'impulsion.

6. Paratonnerre selon la revendication 5, **caractérisé en ce que** ledit premier capteur intégré (9) déclenche l'inversion de la tension aux bornes du condensateur d'impulsion (7) quand la tension aux bornes dudit condensateur (7) est au moins égale à 90% du seuil d'amorçage d'une décharge "dard".

7. Paratonnerre selon la revendication 5 ou 6, **caractérisé en ce que** le temps nécessaire à l'inversion de la tension aux bornes du condensateur d'impulsion (7) est au plus égal à 10 µs.

8. Paratonnerre selon la revendication 5, 6 ou 7, **caractérisé en ce que** l'inversion de la tension aux bornes du condensateur d'impulsion (7) provoque l'inversion de la polarité de l'organe de prise de potentiel (4) et l'amorçage d'une décharge électrique sur l'organe de prise de potentiel (4).

9. Paratonnerre selon l'une des revendications 5 à 8, **caractérisé en ce qu'**il comprend un second capteur intégré (8) qui mesure l'intensité de la décharge électrique qui se forme sur l'organe de prise de potentiel (4) pour la comparer à une valeur d'intensité caractéristique d'une décharge de type traceur et qui, si l'intensité mesurée est supérieure ou égale à ce seuil, commande la décharge du condensateur (6) de l'unité de puissance.

10. Paratonnerre selon la revendication 2, **caractérisé en ce qu'**il utilise l'énergie stockée dans le condensateur (6) de l'unité de puissance de façon couplée et synchrone avec l'énerg²²ie électrostatique présente dans l'atmosphère à l'approche d'un coup de foudre.

11. Paratonnerre selon l'une quelconque des revendications précédentes, **caractérisé en ce qu'**il comprend des moyens permettant de détecter la polarité d'un nuage orageux.

12. Paratonnerre selon la revendication 11, **caractérisé en ce que** l'unité de puissance comporte un transformateur d'impulsion haute tension (TR_{IHT}) à double enroulements primaires (L_{PNIHT}, L_{PPIHT}) connectés chacun, via l'un de deux thyristors de puissance (TH_{N}, TH_{P}), audit condensateur de forte capacité (6), formant condensateur de stockage, ledit condensateur se déchargeant via celui des enroulements primaires qui est sélectionné en fonction de la polarité du nuage orageux, de sorte que l'impulsion haute tension délivrée par le secondaire est de signe contraire à celui dudit nuage orageux.

13. Paratonnerre selon l'une quelconque des revendications précédentes, **caractérisé en ce qu'**il comporte un éclateur (13) surmonté par la base évasée en parapluie (4a) de l'organe de prise de potentiel (4).

## Claims

1. Lightning rod of the type with an initiation device **characterized in that** it comprises:
- a first unit, called "power unit" (P), collecting wind and/or solar energy, converting it into electric energy and storing it;
- a second unit, called "pulse unit" (I), capturing and storing ambient electrostatic energy on the approach of a storm cloud, and
- means suitable, depending on setpoint values, for triggering, on the one hand, the said pulse unit (I) for initiating an ascending tracer and, on the other hand, the said power unit (P) for maintaining the propagation of the said tracer.

2. Lightning rod according to Claim 1, **characterized in that** the power unit comprises, for the collection of wind and/or solar energy, a photovoltaic-cell device (16) and (17) and/or a wind device with piezoelectric cells (3a) and (3b) and/or a wind device coupled to an alternator with permanent magnets (14) and (15) and, for the storage of electric energy, at least one high-capacity capacitor (6).

3. Lightning rod according to Claim 1 or 2, **characterized in that** the said pulse unit comprises, as a means of capturing ambient electrostatic energy, a potential-absorption member (4) and, as a means for storing this energy, at least one low-capacity capacitor (7).

4. Lightning rod according to Claim 3, **characterized in that** the capacity of the pulse capacitor (7) is optimized in order to capture the maximum atmospheric electrostatic energy while allowing the voltage at its terminals to reach the threshold for initiating a "dart" discharge on the potential-absorption member (4).

5. Lightning rod according to Claim 3 or 4, **characterized in that** it also comprises a first integrated sensor (9) which measures the ambient electric field captured by the said potential-absorption member (4) in order to compare it with a value slightly below the initiation threshold characteristic of a "dart" discharge and which, if the measured ambient electric field exceeds this value, commands the inversion of the voltage at the terminals of the said capacitor (7) of the pulse unit.

6. Lightning rod according to Claim 5, **characterized in that** the said first integrated sensor (9) triggers the inversion of the voltage at the terminals of the pulse capacitor (7) when the voltage at the terminals of the said capacitor (7) is at least equal to 90% of the threshold for initiating a "dart" discharge.

7. Lightning rod according to Claim 5 or 6, **characterized in that** the time necessary for the inversion of the voltage at the terminals of the pulse capacitor (7) is at most equal to 10 µs.

8. Lightning rod according to Claim 5, 6 or 7, **characterized in that** the inversion of the voltage at the terminals of the pulse capacitor (7) causes the inversion of the polarity of the potential-absorption member (4) and initiating of an electric discharge on the potential-absorption member (4).

9. Lightning rod according to one of Claims 5 to 8, **characterized in that** it comprises a second integrated sensor (8) which measures the intensity of the electric discharge that forms on the potential-absorption member (4) in order to compare it with an intensity value characteristic of a discharge of the tracer type and which, if the measured intensity is greater than or equal to this threshold, commands the discharge of the capacitor (6) of the power unit.

10. Lightning rod according to Claim 2, **characterized in that** it uses the energy stored in the capacitor (6) of the power unit in a manner that is coupled and synchronous with the electrostatic energy present in the atmosphere on the approach of a flash of lightning.

11. Lightning rod according to any one of the preceding claims, **characterized in that** it comprises means making it possible to detect the polarity of a storm cloud.

12. Lightning rod according to Claim 11, **characterized in that** the power unit comprises a high-voltage pulse transformer (TR_{IHT}) with double primary windings (L_{PNIHT}, L_{PPIHT}) each connected, via one of two power thyristors (TH_{N}, TH_{P}), to the said high-capacity capacitor (6), forming a storage capacitor, with the said capacitor being discharged via that of the primary windings that is selected depending on the polarity of the storm cloud, so that the high-voltage pulse delivered by the secondary winding is of the opposite sign to that of the said storm cloud.

13. Lightning rod according to any one of the preceding claims, **characterized in that** it comprises a spark gap (13) surmounted by the umbrella-like tapered base (4a) of the potential-absorption member (4).

## Patentansprüche

1. Blitzableiter mit Zündungsvorrichtung, **dadurch gekennzeichnet, dass** er umfasst:
- eine erste Einheit, "Leistungseinheit" (P) genannt, die das Sammeln der Wind- und/oder Sonnenergie, ihre Umwandlung in elektrische Energie und ihre Speicherung gewährleistet;
- eine zweite Einheit, "Impulseinheit" (I) genannt, die die Einfangung und Speicherung der umgebenden elektrostatischen Energie bei Annäherung einer Gewitterwolke gewährleistet, und
- Mittel, die dafür ausgelegt sind, in Abhängigkeit von Sollwerten einerseits die Impulsvorrichtung (I) zur Zündung einer aufsteigenden Spur und andererseits die Leistungseinheit (P) zur Aufrechterhaltung der Fortpflanzung der Spur auszulösen.

2. Blitzableiter nach Anspruch 1, **dadurch gekennzeichnet, dass** die Leistungseinheit umfasst: zum Sammeln der Wind- und/oder Sonnenergie eine Photovoltaikzellenvorrichtung (16) und (17) und/oder eine Windvorrichtung mit piezoelektrischen Zellen (3a) und (3b) und/oder eine Windvorrichtung, die mit einem Wechselstromgenerator mit Dauermagneten (14) und (15) gekoppelt ist, und für die Speicherung der elektrischen Energie mindesten einen Kondensator (6) hoher Kapazität.

3. Blitzableiter nach Anspruch 1 oder 2,**dadurch gekennzeichnet, dass** die Impulseinheit als Mittel zum
Einfangen der umgebenden elektrostatischen Energie ein Potentialabnahmeorgan (4) und als Mittel zur Speicherung dieser Energie mindestens einen Kondensator (7) niedriger Kapazität umfasst.

4. Blitzableiter nach Anspruch 3, **dadurch gekennzeichnet, dass** die Kapazität des Impulskondensators (7) so optimiert ist, dass sie das Maximum an atmosphärischer elektrostatischer Energie einfangen kann und gleichzeitig der Spannung an seinen Anschlüssen gestatten kann, die Schwelle zur Zündung einer "Spiess"-Entladung an dem Potentialabnahmeorgan (4) zu erreichen.

5. Blitzableiter nach Anspruch 3 oder 4, **dadurch gekennzeichnet, dass** er außerdem einen ersten integrierten Fühler (9) umfasst, der das von dem Potentialabnahmeorgan (4) eingefangene umgebende elektrische Feld misst, um es mit einem Wert zu vergleichen, der etwas niedriger als die charakteristische Zündungsschwelle einer "Spiess"-Entladung ist und der, wenn das gemessene umgebende elektrische Feld diesen Wert überschreitet, die Umkehrung der Spannung an den Anschlüssen des Kondensators (7) der Impulseinheit steuert.

6. Blitzableiter nach Anspruch 5, **dadurch gekennzeichnet, dass** der erste integrierte Fühler (9) die Umkehrung der Spannung an den Anschlüssen des Impulskondensators (7) auslöst, wenn die Spannung an den Anschlüssen dieses Kondensators (7) mindestens gleich 90% der Zündungsschwelle einer "Spieß"-Entladung beträgt.

7. Blitzableiter nach Anspruch 5 oder 6, **dadurch gekennzeichnet, dass** die für die Umkehrung der Spannung an den Anschlüssen des Impulskondensators (7) erforderliche Zeit höchstens gleich 10 µs ist.

8. Blitzableiter nach Anspruch 5, 6 oder 7, **dadurch gekennzeichnet, dass** die Umkehrung der Spannung an den Anschlüssen des Impulsgenerators (7) die Umkehrung der Polarität des Potentialabnahmeorgans (4) und die Zündung einer elektrischen Entladung an dem Potentialabnahmeorgan (4) bewirkt.

9. Blitzableiter nach einem der Ansprüche 5 bis 8, **dadurch gekennzeichnet, dass** er einen zweiten integrierten Fühler (8) umfasst, der die Stärke der elektrischen Entladung misst, die sich auf dem Potentialabnahmeorgan (4) bildet, um sie mit einem charakteristischen Stärkewert einer Spurentladung zu vergleichen, und der, wenn die gemessene Stärke höher als oder gleich dieser Schwelle ist, die Entladung des Kondensator (6) der Leistungseinheit steuert.

10. Blitzableiter nach Anspruch 2, **dadurch gekennzeichnet, dass** er die in dem Kondensator (6) der Leistungseinheit gespeicherte Energie gekoppelt und synchron mit der bei Annäherung eines Blitzes in der Atmosphäre vorhandenen elektrischen Energie benutzt.

11. Blitzableiter nach einem der vorhergehenden Ansprüche, **dadurch gekennzeichnet, dass** er Mittel umfasst, die es gestatten, die Polarität einer Gewitterwolke zu erfassen.

12. Blitzableiter nach Anspruch 11, **dadurch gekennzeichnet, dass** die Leistungseinheit einen Hochspannungs-Impulstransformator (TR_{IHT}) mit doppelten Primärwicklungen (L_{PNIHT}, L_{PPIHT}) umfasst, die jeweils über einen der beiden Leistungsthyristoren (TH_{N}, TH_{P}) mit dem den Speicherkondensator bildenden Kondensator (6) hoher Kapazität verbunden sind, wobei dieser Kondensator sich über diejenige der Primärwicklungen entlädt, die in Abhängigkeit von der Polarität der Gewitterwolke ausgewählt ist, so dass der von der Sekundärseite gelieferte Hochspannungsimpuls das entgegengesetzte Vorzeichen wie die Gewitterwolke hat.

13. Blitzableiter nach einem der vorhergehenden Ansprüche, **dadurch gekennzeichnet, dass** er eine Funkenstrecke (13) umfasst, über der sich die regenschirmartig ausgeweitete Basis (4a) des Potentialabnahmeorgans (4) befindet.
